# EUROPÄISCHE PATENTSCHRIFT

(11) **EP 0 544 984 B1**
(45) Veröffentlichungstag und Bekanntmachung des Hinweises auf die Patenterteilung: **03.01.1996**
(21) Anmeldenummer: 92111122.5
(22) Anmeldetag: 01.07.1992
(51) Int. Cl.: F16J 15/32, F16J 15/56, F15B 15/08

(54) **Dichtung an einem hin- und hergehenden Körper**
Sealing on alternating moving parts
Joint d'étanchéité à des éléments animés d'un mouvement alternatif

(30) Priorität: 04.12.1991 DE 4139919
(43) Veröffentlichungstag der Anmeldung: 09.06.1993
(73) Patentinhaber: Firma Carl Freudenberg, D-69469 Weinheim (DE)
(72) Erfinder: Gies, Anita, W-3577 Neustadt (DE); Wüstenhagen, Ulrich, W-3578 Schwalmstadt (DE); Lipphardt, Wolfgang, W-3578 Schwalmstadt 1 (DE)

(56) Entgegenhaltungen:
- DE-A- 3 922 280
- DE-B- 1 293 037
- US-A- 4 121 840

## Beschreibung

Die Erfindung betrifft eine Dichtung an einem hin- und hergehenden Körper, der zumindest eine sich parallel zu seiner Längsachse erstreckende, im wesentlichen ebene Begrenzungsfläche aufweist, umfassend einen Dichtungskörper mit einer parallel zu der Längsachse vorspringenden ersten Dichtlippe aus polymerem Werkstoff, die die Begrenzungsfläche anliegend berührt.

Eine solche Dichtung ist allgemein bekannt und gelangt beispielsweise als Stangendichtung zur Anwendung. Bei den abzudichtenden Medien kann es sich beispielsweise um Druckluft oder Hydraulikflüssigkeit handeln. Insbesondere bei der Abdichtung von elliptischen Körpern oder von Körpern mit im wesentlichen ebenen Begrenzungsflächen ist die Abdichtung, insbesondere im mittleren Bereich der im wesentlichen ebenen Begrenzungsflächen wenig befriedigend. Mit zunehmender Gebrauchsdauer treten Undichtigkeiten und eine damit verbundene Leckage in diesem Bereich auf. Exzentrizitäten der Lage des abzudichtenden Körpers verstärken die Gefahr von Undichtigkeiten weiter.

Der Erfindung liegt die Aufgabe zugrunde, eine Dichtung der eingangs genannten Art derart weiterzuentwickeln, daß sich eine zuverlässige Abdichtung sämtlicher Begrenzungsflächen des hin- und hergehenden Körpers ergibt und gute Gebrauchseigenschaften während einer langen Gebrauchsdauer erhalten bleiben.

Diese Aufgabe wird bei einer gattungsgemäßen Dichtung mit den kennzeichnenden Merkmalen von Patentanspruch 1 gelöst. Auf vorteilhafte Ausgestaltungen nehmen die Unteransprüche bezug.

Bei der erfindungsgemäßen Dichtung an einem hin- und hergehenden Körper weist die erste Dichtlippe, quer zur Längsachse des Dichtungskörpers betrachtet, in der Mitte der ebenen Begrenzungsfläche des Körpers einen größeren Querschnitt auf und/oder die erste Dichtlippe ist, quer zur Längsachse des Dichtungskörpers betrachtet, in der Mitte der ebenen Begrenzungsfläche des Körpers, parallel zur Längsachse des Dichtungskörpers kürzer ausgeführt, als im Bereich von deren seitlichen Rändern. Hierbei ist von Vorteil, daß sich über den gesamten Querschnitt des abzudichtenden Körpers eine annähernd konstante Anpressung der ersten Dichtlippe und somit eine zuverlässige Abdichtung während einer langen Gebrauchsdauer ergibt. Außerdem bedingt diese Ausgestaltung des Dichtungskörpers zusätzlich ein gute Leichtgängigkeit des hin- und hergehenden Körpers, was insbesondere in Verbindung mit geringen Antriebskräften von hervorzuhebender Bedeutung ist. Auch Exzentrizitäten der Lage des abzudichtenden Körpers im Bereich einiger 1/10 mm beeinflussen die Gebrauchseigenschaften der Dichtung nicht nachteilig.

Die erste Dichtlippe kann auf der dem abzudichtenden Raum abgewandten Seite an einem Boden festgelegt sein, der im wesentlichen eine Ausdehnung in radialer Richtung aufweist und die erste Dichtlippe mit einer im wesentlichen gleichgerichteten zweiten Dichtlippe verbindet, wobei nur die zweite Dichtlippe unter radialer Vorspannung mit einem statischen Maschinenteil in Eingriff bringbar ist. Der Dichtungskörper kann beispielsweise in die Nut eines Gehäuses eingeschnappt sein, wobei nur die zweite Dichtlippe in zumindest einem Teilbereich unter radialer Vorspannung die Nut anliegend berührt. Dadurch, daß der Boden nicht ebenfalls mit der Nut in Eingriff ist, können Exzentrizitäten des hin- und hergehenden Körpers im Bereich von einigen 1/10 Millimetern problemlos zugelassen werden. Eine sichere Abdichtung ist auch dann gewährleistet. Die Größe der radialen Vorspannung, mit der die zweite Dichtlippe an dem Maschinenteil festgelegt ist, sowie der Federweg der zweiten Dichtlippe in radialer Richtung ist den jeweiligen Gegebenheiten des Anwendungsfalles anzupassen. Eine Verwendung findet der Dichtungskörper beispielsweise als Zugbandabdichtung. Auch geringe Verdrehungen des Körpers in bezug auf das statische Maschinenteil können durch diese Ausgestaltung der zweiten Dichtlippe kompensiert werden.

Die zweite Dichtlippe weist zumindest eine Dichtkante auf und kann nach einer weiteren Ausgestaltung im Bereich der Dichtkante eine Ringwendelfeder umschließen. Mögliche Relaxationserscheinungen der aus polymerem Werkstoff bestehenden zweiten Dichtlippe und eine dadurch bedingte, während der Gebrauchsdauer nachlassende Vorspannung in Richtung des statischen Maschinenteils könnte durch die Verwendung einer Ringwendelfeder wirkungsvoll vermieden werden. Im Falle der Wahl eines geeigneten Werkstoffs kann die Vorspannung durch ein elastisches Anpreßteil erzielt werden, welches einstückiger Bestandteil der zweiten Dichtlippe ist.

Eine besonders gleichmäßige Anpressung der ersten Dichtlippe an den Körper ist dadurch zu erzielen, daß die verschieden großen Querschnitte der Dichtlippe gleichmäßig ineinander übergehend ausgebildet sind.

Eine einfache Herstellung sowie eine einfache Montage der Dichtung ist gegeben, wenn die beiden Dichtlippe einen einstückigen Bestandteil eines nur aus polymerem Werkstoff bestehenden Dichtungskörpers bilden. Eine einstückige Ausbildung des Dichtungskörpers aus polymerem Werkstoff ist auch in wirtschaftlicher Hinsicht besonders vorteilhaft.

Der Dichtungskörper kann am Fuß der ersten Dichtlippe im Bereich des Bodens eine Stützfläche für die Begrenzungsfläche aufweisen, die der Profilkontur des hin- und hergehenden Körpers angepaßt ist. Hierbei ist von Vorteil, daß zusätzlich zur ersten Dichtlippe auch die Stützfläche die Begrenzungsfläche des Körpers anliegend berührt und stets eine lagerichtige Ausrichtung des Dichtkörpers zur Kontur des hin- und hergehenden Körpers gewährleistet ist. Darüberhinaus ist von Vorteil, daß die erste Dichtlippe keine Führung des Dichtkörpers übernehmen muß, sondern daß sie lediglich die Funktion der Abdichtung übernimmt. Daraus resultiert ein besonders geringer Verschleiß der dynamisch belasteten, ersten Dichtlippe und damit verbunden gute Gebrauchseigenschaften während einer langen Gebrauchsdauer.

Gemäß einer vorteilhaften Ausgestaltung kann der Boden eine axiale Ausdehnung aufweisen, die wenigstens ein Drittel so groß ist, wie die axiale Ausdehnung der ersten Dichtlippe. Gemäß dieser Ausgestaltung kann auf Armierungen innerhalb des Dichtungskörpers verzichtet werden, wodurch eine kostengünstige Herstellbarkeit bedingt ist. Eine ausreichende Steifigkeit des Dichtungskörpers ist nach dieser Ausgestaltung auch während einer langer Gebrauchsdauer gewährleistet.

Die Dichtung der vorliegenden Erfindung wird nachfolgend anhand der Zeichnungen weiter erläutert. Diese zeigen die zu berücksichtigenden Einzelkomponenten beispielhaft und teilweise in schematischer Darstellung.

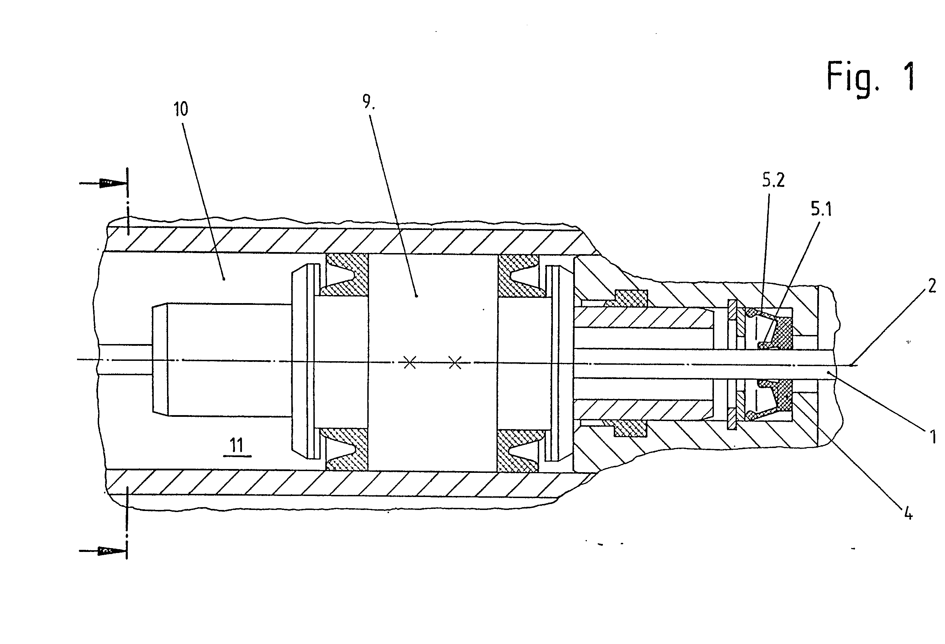

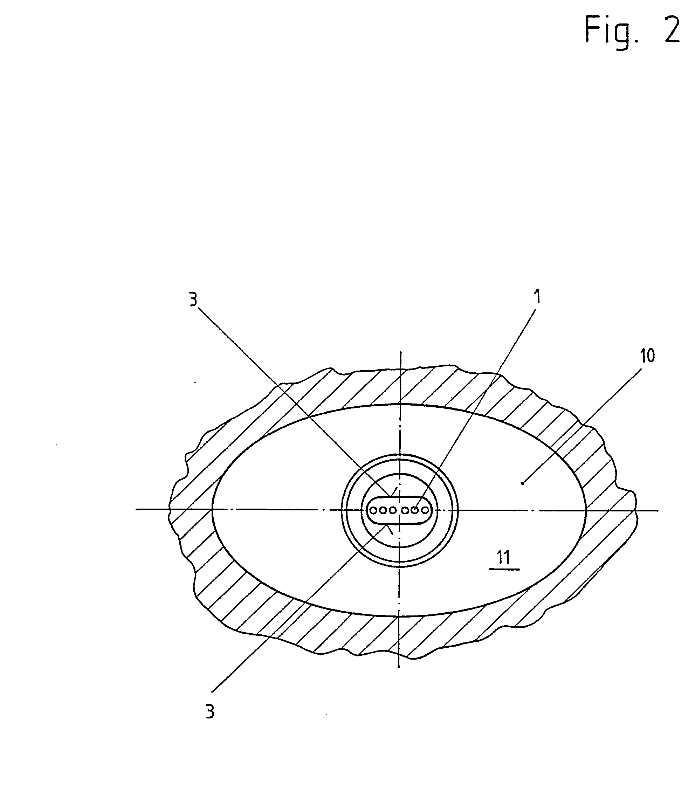

In den Fig. 1 und 2 ist ein Ausschnitt aus einer Zylinderkonstruktion in teilweise geschnittener Darstellung gezeigt, in der die erfindungsgemäße Dichtung beispielsweise zur Anwendung gelangen kann.

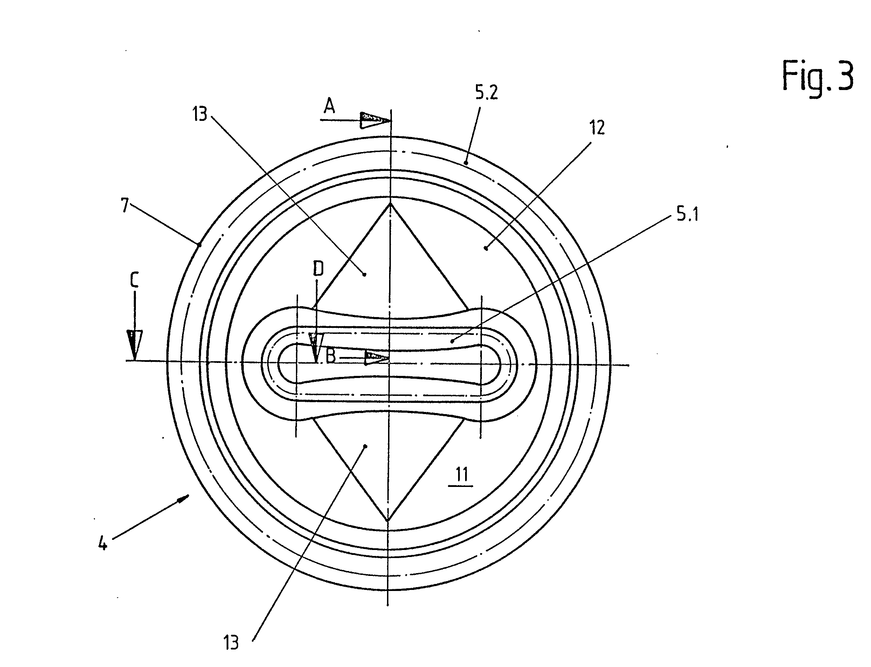

In den Fig. 3 bis 5 ist ein Ausführungsbeispiel des erfindungsgemäßen Dichtungskörpers gezeigt, der zur Abdichtung des hin und hergehenden Körpers gemäß der Fig. 1 und 2 vorgesehen ist. In den Fig. 1 und 2 ist ein Aussdhnitt aus einer Zylinderkonstruktion gezeigt, mit einem hin- und hergehenden Körper 1, der beispielsweise als biegeweiches, bandförmiges Element ausgebildet ist. Der Körper 1 weist im wesentlichen zwei ebene Begrenzungsflächen 3 auf, die durch gekrümmte Begrenzungsflächen miteinander verbunden sind und von der ersten Dichtlippe 5.1 und der Stützfläche 6 des Dichtungskörpers 4, der aus polymerem Werkstoff besteht, anliegend berührt werden.

In den Fig. 3 bis 5 ist der Dichtungskörper 4 gezeigt, dessen erste Dichtlippe 5.1 in der Mitte der Begrenzungsflächen 3 des hin- und hergehenden Körpers 1, quer zur Längsachse 2 gesehen, einen größeren Querschnitt aufweist und kürzer ausgeführt ist, als im Bereich von deren seitlichen Rändern. Dies hat zur Folge, daß die vergleichsweise breiten, ebenen Begrenzungsflächen 3 des Körpers 1 auch während einer langen Gebrauchsdauer zuverlässig abgedichtet werden. Die Anpressung der ersten Dichtlippe 5.1 entlang des gesamten Umfangs des Körpers 1 ist nahezu konstant.

In Fig. 3 ist eine Ansicht des Dichtungskörpers 4 dargestellt, bei dem die konvexe Wölbung der ersten Dichtlippe 5.1 zu erkennen ist. Der größte Querschnitt der ersten Dichtlippe 5.1 befindet sich in der Mitte der hier nicht dargestellten ebenen Begrenzungsflächen 3, so daß in diesen Bereichen eine Anpressung der ersten Dichtlippe 5.1 gewährleistet ist, die annähernd genau so groß ist wie in den übrigen Umfangsbereichen. Neben einer zuverlässigen Abdichtung bewirkt diese Ausgestaltung auch einen annähernd gleichmäßigen, geringen Verschleiß der dynamisch belasteten Dichtlippe 5.1 und eine gute Ausnutzung des gesamten Dichtungskörpers 4. In diesem Beispiel ist es vorgesehen, daß die erste Dichtlippe 5.1 einen einstückigen Bestandteil eines nur aus polymerem Werkstoff bestehenden Dichtringes bildet und daß am Fuß der ersten Dichtlippe 5.1 eine Stützfläche 6 für die Begrenzungsfläche 3 vorgesehen ist. Die erste Dichtlippe 5.1 ist auf der dem abzudichtenden Raum 11 abgewandten Seite an einem Boden 12 festgelegt, der die erste Dichtlippe 5.1 mit der zweiten Dichtlippe 5.2 verbindet. Neben dem vergrößerten Querschnitt der ersten Dichtlippe 5.1 ist diese zusätzlich im Mittelbereich der ebenen Begrenzungsflächen 3 kürzer, d. h. weniger federnd ausgelegt. Die Verkürzung der ersten Dichtlippe 5.1 wird in diesem Beispiel durch kegelförmige Versteifungsrippen 13 erreicht.

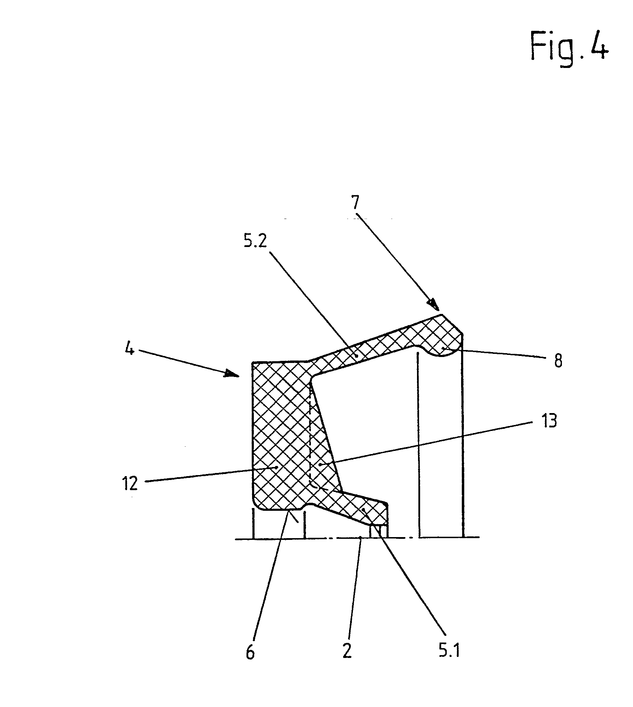

In Fig. 4 ist ein Halbschnitt entlang der Linie A-B gemäß Fig. 3 gezeigt. In diesem Schnitt ist der größere Querschnitt der ersten Dichtlippe 5.1 im Bereich der Mitte der im wesentlichen ebenen Begrenzungsfläche 3 gezeigt sowie die Dichtkante 7 der zweiten Dichtlippe 5.2 entlang des kreisrunden Außenumfanges des Dichtungskörpers 4. Für eine ausreichende Anpressung der Dichtkante 7 an das kreiszylindrische Gehäuse, beispielsweise eine Nut, sorgt ein Wulst 8 am in radialer Richtung innenliegenden Umfang der Dichtkante 7. Alternativ kann an Stelle des Wulstes 8 auch eine in diesem Bereich festgelegte Ringwendelfeder zur Anwendung gelangen. Die Verkürzung der ersten Dichtlippe 5.1 durch die kegelförmigen Versteifungsrippen 13 ist in dieser Darstellung gut zu erkennen. In Richtung der seitlichen Ränder der ebenen Begrenzungsflächen wird die erste Dichtlippe 5.1 relativ länger und die Biegesteifigkeit relativ geringer.

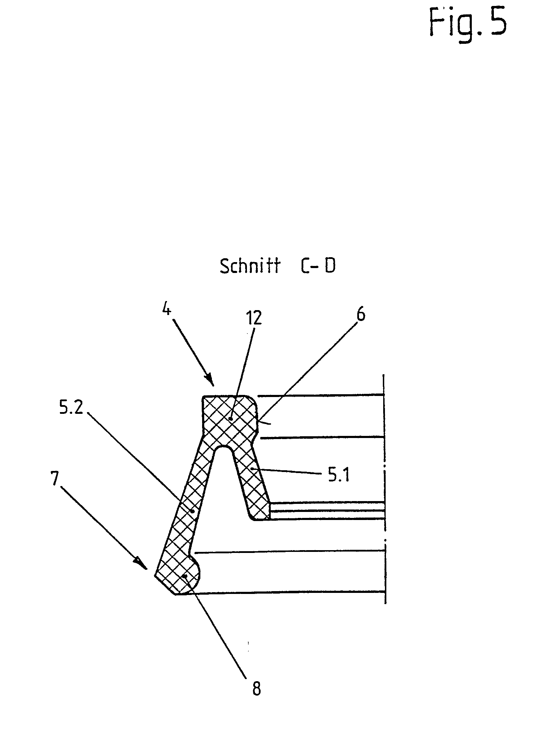

Fig. 5 zeigt den Schnitt C-D gemäß Fig. 3. In dieser Darstellung ist der vergleichsweise geringere Querschnitt der ersten Dichtlippe 5.1 im Bereich der seitlichen Ränder der Begrenzungsflächen 3 zu erkennen sowie ihre größere Länge. Auch in dieser Darstellung ist die Dichtkante 7, der Wulst 8, die zweite Dichtlippe 5.2 und die Stützfläche 6 gezeigt.

Zur Funktion wird folgendes ausgeführt: Ein verdrehgesicherter, beispielsweise ovaler Kolben 9 gemäß Fig. 1 wird in einem geschlossenen Zylinder 10 mit entsprechendem Querschnitt mit Druck beaufschlagt. Dadurch bewegt er sich in Richtung der Längsachse 2 des hin- und hergehenden, abzudichtenden Körpers 1 ohne Verdrehung im Zylinder 10. Der Kolben 9 ist über den Körper 1, der in diesem Beispiel als Zugband vorgesehen ist, mit einem hier nicht dargestellten, längsverschieblichen Teil direkt verbunden. Die Bewegung des Kolbens 9 kann direkt oder über eine Umlenkung übertragen werden. Der Druckraum im Zylinder 10 wird gegen die Atmosphäre abgedichtet. Der Dichtungskörper 4 dichtet einerseits den hin- und hergehenden Körper 1 ab und richtet sich mit dem formstabilen Boden 12 und der ersten Dichtlippe 5.1 andererseits durch die am Fuß der ersten Dichtlippe 5.1 angeordnete Stützfläche 6 auch bei exzentrischer oder schiefer Lage des Körpers 1 immer entsprechend der Lage der Begrenzungsflächen aus. Durch die Form der ersten Dichtlippe 5.1 wird eine annährend konstante Anpressung gegen die Begrenzungsfläche des Körpers 1 über den gesamten Umfang gewährleistet, dadurch, daß die erste Dichtlippe 5.1 konvex ausgebildet ist und im mittleren Bereich der ebenen Begrenzungsflächen 3 einen größeren Querschnitt aufweist und kürzer ausgeführt ist, als im Bereich von deren seitlichen Rändern. Die Versteifungsrippen 13 sind in in diesem Fall kegelförmig ausgebildet und wirken zusätzlich als Versteifung der ersten Dichtlippe 5.1. Die Abdichtung zum Gehäuse ist kreisförmig und erfolgt über eine Dichtkante 7, die mit einem Wulst 8 gegen das Gehäuse gepreßt ist. Im Rahmen der vorliegenden Erfindung liegen nicht - wie sonst üblich - der Boden 12 und die zweite Dichtlippe 5.2 beispielsweise in einer Nut dichtend an, sondern nur die zweite Dichtlippe 5.2. Der Boden 12 ist in Abhängigkeit von den jeweiligen Gegebenheiten des Anwendungsfalles mit einem radialen Abstand zum Nutgrund benachbart, so daß auch bei exzentrischer Lage des Körpers 1 sowohl eine gute Abdichtung als auch eine große Leichtgängigkeit des Körpers 1 innerhalb des Dichtkörpers 4 gewährleistet ist.

## Patentansprüche

1. Dichtung an einem hin- und hergehenden Körper (1), der zumindest eine sich parallel zu seiner Längsachse (2) erstreckende, im wesentlichen ebene Begrenzungsfläche (3) aufweist, umfassend einen Dichtungskörper (4) mit einer parallel zu seiner Längsachse (2) vorspringenden ersten Dichtlippe (5.1) aus polymerem Werkstoff, die die Begrenzungsfläche (3) anliegend berührt, dadurch gekennzeichnet, daß die erste Dichtlippe (5.1), quer zur Längsachse (2) des Dichtungskörpers (4) betrachtet, in der Mitte der ebenen Begrenzungsfläche (3) des Körpers (1) einen größeren Querschnitt aufweist und/oder daß die erste Dichtlippe (5.1) quer zur Längsachse (2) des Dichtungskörpers (4) betrachtet, in der Mitte der ebenen Begrenzungsfläche (3) des Körpers (1), parallel zur Längsachse (2) des Dichtungskörpers (4) kürzer ausgeführt ist, als im Bereich von deren seitlichen Rändern.

2. Dichtung nach Anspruch 1, dadurch gekennzeichnet, daß die erste Dichtlippe (5.1) auf der einem abzudichtenden Raum (11) abgewandten Seite an einem Boden (12) festgelegt ist, daß der Boden (12) im wesentlichen eine Ausdehnung in radialer Richtung aufweist, daß der Boden (12) die erste Dichtlippe (5.1) mit einer im wesentlichen gleichgerichteten zweiten Dichtlippe (5.2) verbindet und daß nur die zweite Dichtlippe (5.2) unter Vorspannung mit einem statischen Maschinenteil in Eingriff bringbar ist.

3. Dichtung nach Anspruch 2, dadurch gekennzeichnet, daß die zweite Dichtlippe (5.2) zumindest eine Dichtkante (7) aufweist und im Bereich der Dichtkante (7) eine Ringwendelfeder umschließt.

4. Dichtung nach Anspruch 1 bis 3, dadurch gekennzeichnet, daß die verschieden großen Querschnitte der ersten Dichtlippe (5.1) gleichmäßig ineinander übergehend ausgebildet sind.

5. Dichtung nach Anspruch 1 bis 4, dadurch gekennzeichnet, daß die erste und/oder die zweite Dichtlippe (5.1, 5.2) einen einstückigen Bestandteil eines nur aus polymerem Werkstoff bestehenden Dichtungskörpers (4) bildet.

6. Dichtung nach Anspruch 5, dadurch gekennzeichnet, daß der Dichtungskörper (4) am Fuß der ersten Dichtlippe (5.1) im Bereich des Bodens (12) eine Stützfläche (6) für die Begrenzungsfläche (3) aufweist.

7. Dichtung nach Anspruch 2 bis 6, dadurch gekennzeichnet, daß der Boden (12) eine axiale Ausdehnung aufweist, die wenigstens ein Drittel so groß ist, wie die axiale Ausdehnung der ersten Dichtlippe (5.1).

## Claims

1. A seal on a body (1) which moves back and forth and has at least one substantially flat boundary surface (3) which extends parallel to the longitudinal axis (2) of said body, comprising a seal body (4) with a first sealing lip (5.1) of polymer material, which projects parallel to the longitudinal axis (2) of said body and contacts the boundary surface (3), bearing against it, characterized in that, viewed transversely to the longitudinal axis (2) of the seal body (4), the first sealing lip (5.1) has a larger cross-section in the centre of the flat boundary surface (3) of the body (1), and/or in that, viewed transversely to the longitudinal axis (2) of the seal body (4), the first sealing lip (5.1) is designed to be shorter in the centre of the flat boundary surface (3) of the body (1) parallel to the longitudinal axis (2) of the seal body (4) than in the region of the lateral edges thereof.

2. A seal according to claim 1, characterized in that the first sealing lip (5.1) is fixed on a base (12) on the side facing away from a space (11) to be sealed off, in that the base (12) has an extent substantially in the radial direction, in that the base (12) connects the first sealing lip (5.1) to a second sealing lip (5.2) disposed substantially in the same direction, and in that only the second sealing lip (5.2) can be brought into engagement under prestress with a static machine part.

3. A seal according to claim 2, characterized in that the second sealing lip (5.2) has at least one sealing edge (7) and surrounds an annular helical spring in the region of the sealing edge (7).

4. A seal according to any of claims 1 to 3, characterized in that the differently sized cross-sections of the first sealing lip (5.1) are designed to merge uniformly into one another.

5. A seal according to any of claims 1 to 4, characterized in that the first and/or the second sealing lip (5.1, 5.2) forms an integral constituent of a seal body (4) consisting only of polymer material.

6. A seal according to claim 5, characterized in that the seal body (4) has a supporting surface (6) for the boundary surface (3) at the foot of the first sealing lip (5.1) in the region of the base (12).

7. A seal according to any of claims 2 to 6, characterized in that the base (12) has an axial extent which is at least one third as large as the axial extent of the first sealing lip (5.1).

## Revendications

1. Joint d'étanchéité au niveau d'un élément (1) animé d'un mouvement alternatif, lequel élément comporte au moins une surface de délimitation (3) essentiellement plane s'étendant de manière parallèle à son axe longitudinale (2), comprenant un corps d'étanchéité (4) avec une première lèvre d'étanchéité (5.1) en matériau polymère faisant saillie de manière parallèle à son axe longitudinal (2), laquelle adhère à la surface de délimitation (3), caractérisé en ce que la première lèvre d'étanchéité (5.1), dans une vue perpendiculaire à l'axe longitudinal (2) du corps d'étanchéité (4), présente au centre de la surface de délimitation (3) plane de l'élément (1) une section transversale plus grande, et/ou en ce que la première lèvre d'étanchéité (5.1), dans une vue perpendiculaire à l'axe longitudinal (2) du corps d'étanchéité (4), est réalisée de manière plus courte au centre de la surface de délimitation (3) plane de l'élément (1), parallèle à l'axe longitudinal (2), que dans la partie de ses bords latéraux.

2. Joint d'étanchéité selon la revendication 1, caractérisé en ce que la première lèvre d'étanchéité (5.1) est fixée sur le côté opposé à un espace (11) à rendre étanche sur un fond (12), en ce que le fond (12) présente essentiellement une extension dans le sens radial, en ce que le fond (12) relie la première lèvre d'étanchéité (5.1) à une deuxième lèvre d'étanchéité (5.2) essentiellement dirigée dans le même sens, et en ce que seule la deuxième lèvre d'étanchéité (5.2) peut être mise en prise par précontrainte avec une pièce mécanique statique.

3. Joint d'étanchéité selon la revendication 2, caractérisé en ce que la deuxième lèvre d'étanchéité (5.2) comporte au moins une arête étanche (7) et enferme au niveau de l'arête étanche (7) un anneau-ressort hélicoïdal.

4. Joint d'étanchéité selon l'une des revendications 1 à 3, caractérisé en ce que les sections transversales de taille différente de la première lèvre d'étanchéité (5.1) sont réalisées de manière à se confondre uniformément.

5. Joint d'étanchéité selon l'une des revendications 1 à 4, caractérisé en ce que la première et/ou la deuxième lèvre d'étanchéité (5.1, 5.2) forme un élément d'une pièce d'un corps d'étanchéité (4) composé exclusivement d'un matériau polymère.

6. Joint d'étanchéité selon la revendication 5, caractérisé en ce que le corps d'étanchéité (4) présente à la base de la première lèvre d'étanchéité (5.1) au niveau du fond (12) une surface d'appui (6) pour la surface de délimitation (3).

7. Joint d'étanchéité selon l'une des revendications 2 à 6, caractérisé en ce que le fond (12) présente une extension axiale qui représente au moins un tiers de l'extension axiale de la première lèvre d'étanchéité (5.1).
